# EUROPEAN PATENT APPLICATION

(11) **EP 1 411 455 A1**
(43) Date of publication of application: **21.04.2004**
(21) Application number: 03023123.7
(22) Date of filing: 10.10.2003
(51) Int. Cl.: G06F 17/60

(54) **System and method for content management assessment**

(30) Priority: 11.10.2002 US 418443; 19.08.2003 US 643532
(71) Applicant: Xerox Corporation, Rochester, New York 14644 (US)
(72) Inventor: Lindsay-Scott,Alex, Middlesex HA6 3EB (GB); Seymour, David, Hertfordshire, SG1 4AS (GB); Gutknecht, Matthias, 8400 Winterthur SZ (CH); Bone, Stephen, St. Albans Herts,AL1 5LD (GB); Haatrbosch,Christian, 4706 TK, Roosendaal (NL); Reynaud, Francois, Paris (FR); Jones, Jim Irving, Rochester, Michigan 48306 (US); Stock, Thomas, 3400 Burgdorf (CH); Wiecken, Manfred, 40764,Langenfeld (DE)
(74) Representative: Grünecker, Kinkeldey, Stockmair & Schwanhäusser Anwaltssozietät

(57) **Abstract**

A method for assessing content management includes identifying business critical information across processes and groups within the organization, identifying transactions between users within the organization which are associated with the business critical information; identifying major value chain processes within the organization for managing the business critical information and their associated transactions; analyzing the role and flow of the business critical information and their associated transactions within the major value chain processes to develop a set of modifications to the major value chain processes for achieving an optimized flow; measuring the flow of the business critical information and their associated transactions to determine a baseline flow; and modifying the major value chain processes in accordance with the set of developed modifications and measuring the flow of the business critical information and their associated transactions until the optimized flow has been achieved.

## Description

### FIELD OF THE INVENTION

This invention relates generally to a system and method for content management assessment, and more particularly to a system and method which employs metrics across a broad spectrum of content types.

### BACKGROUND OF THE INVENTION

Organizations depend on vast amounts of information to operate; indeed, organizations can be saturated with information. But information alone does not guarantee success. Information needs to be marshaled and organized for its intended purpose. Some of this information is embedded in document form on the web, on other digital media, or on paper (media-based). Other information can be more elusive; it is vested in people and acts as the foundation for their knowledge (knowledge-based).

Conventional information technologies provide software-based solutions, called document management, for managing certain types of information. Document management addresses the storage and recall of documents as objects. As a natural follow-on, "content" within documents, such as sentences, paragraphs, tables, and graphics, can also be managed. Content management involves managing internal objects and supports their dynamic reuse in different documents. However, conventional information technology (IT) systems often overlook information in files, manuals, web pages, reports, letters, etc. Conventional information technology also ignores unrecorded information.

An organization has to optimize its use of both media-based and knowledge-based resources to thrive and grow. An organization has to provide timely access to relevant information and knowledge, distributing it to the people who need it, re-using it whenever possible, realizing opportunities and removing overhead. An organization's value and future rely on the effective use and enhancement of its intellectual assets such as the knowledge of its people, the information available through them to and from customers and business partners. This means re-inventing and innovating business processes and changing work practices, often through the hiring of consultants and focusing on application areas such as Customer Relationship Management (CRM) or Enterprise Resource Planning (ERP).

An existing method for delivering content management related consultancy services is for each service consultant to rely on examples of his own previous work, and on haphazardly gathered examples of the work of other service consultants. Organizations need a system and method for managing content in order to change and improve their business by designing processes and building systems that organize and exploit this material. Organizations need a method for assessing content management which assesses all relevant information in an organization, both recorded and unrecorded.

### SUMMARY OF THE INVENTION

A system and method for assessing content management, according to one aspect of the invention, includes identifying business critical information across processes and groups within the organization. Instead of focusing on specific application areas such as Customer Relationship Management or Enterprise Resource Planning, the system and method of the invention focus on information and knowledge content across processes and organizational groups within the organization. The system and method recognizes the fact that one group within an organization or one process within an organization may require information from other processes and organizations. Business critical information includes information stored in the form of web content, electronic documents, paper documents and digital media and also unrecorded information. Transactions between users within the organization which are associated with the business critical information are identified. Major value chain processes within the organization for managing the business critical information and their associated transactions are identified. The role and flow of the business critical information and their associated transactions within the major value chain processes across organizational groups within the organization are analyzed to develop a set of modifications to the major value chain processes for achieving an optimized flow. The flow of the business critical information and their associated transactions through the major value chain processes across the organizational groups within the organization is measured to determine a baseline flow for the business critical information. The major value chain processes are modified in accordance with the set of developed modifications and the flow of the business critical information and their associated transactions through the modified major value chain processes is measured. This process is repeated until the optimized flow has been achieved.

The step of analyzing the role and flow of the business critical information and their associated transactions may include pinpointing problems in which business critical information, knowledge and processes combine to affect key business performance indicators. The step of analyzing the role and flow of the business critical information and their associated transactions may also include developing a set of metrics for measuring the flow of the business critical information and their associated transactions through the major value chain processes across the organizational groups within the organization.

The system and method may further include defining a particular business service (or component service) within the organization which uses business critical information in a defined way. Examples of particular business services include a content strategy for identifying and managing content-related initiatives across the organization; a knowledge and work practice assessment for identifying critical and competitive factors within the organization; a business case for developing a cost-benefit justification of a proposed content improvement initiative; a requirements analysis and specification for process innovation for the organization; and a requirements analysis and specification for solution development for the enterprise. Two or more of the business services may be combined or a customization provided for a particular customer.

An important tool used in the system and method for the various identification steps is a workbook with an ordered set of templates for gathering each of business critical information, associated transactions, and major value chain processes. A workbook may be defined for each of the component services. The workbook is a tool which has a baseline set of templates for use in each of the component services. The templates can be customized for a particular customer, organization, industry or other defined conditions. The templates can be used as a means for collecting and recording unrecorded knowledge within the organization. The templates can be completed by a consultant after observation of an organization's processes or used as an interview form to elicit information from members of the organization.

In accordance with another aspect of the invention a system for assessing content management within an organization, includes means for identifying business critical information across processes and groups within the organization, wherein business critical information comprises information stored in the form of web content, electronic documents, paper documents and digital media and unrecorded information; means for identifying transactions within the organization which are associated with the business critical information; identifying major value chain processes within the organization for managing the business critical information and their associated transactions; means for analyzing the role and flow of the business critical information and their associated transactions within the major value chain processes across organizational groups within the organization to develop a set of modifications to the major value chain processes for achieving an optimized flow; means for measuring the flow of the business critical information and their associated transactions through the major value chain processes across the organizational groups within the organization to determine a baseline flow for the business critical information; and means for modifying the major value chain processes in accordance with the set of developed modifications and measuring the flow of the business critical information and their associated transactions through the modified major value chain processes until the optimized flow has been achieved.

A system and method for assessing content management (content management assessment or CMA) examines and analyzes the roles and flow of business critical information held in the form of web content, electronic documents, paper documents and other digital media/assets and knowledge assets within major value chain processes in the business. The system and method for CMA delivers metrics which provide a clear means for measuring a client's business information flows and their use. The system and method for CMA develops measurable goals for business improvement related to the management of information and the associated transactions between users of that information. The system and method for CMA can be used to provide customer deliverables: reports on findings, an assessment of strengths and weaknesses, metrics that assist in developing business cases for change, proposed changes to business processes, requirements specifications, an overall strategy and an action plan with key recommendations. The system and method for CMA enables the preparation of a detailed design and deployment of solutions, not only handling the technical aspects of systems integration, but also working with our clients to develop and implement change management programs, with hosting and managed service operations. The system and method for CMA solves the problem of sub-optimal management of content and information to support business objectives.

### BRIEF DESCRIPTION OF THE DRAWINGS

FIG. 1 is a block diagram of a system for consult methodology assessment including five component services;
FIG. 2 is a block diagram of a method of implementing a CMA; and
FIG. 3 is a flow chart of the steps involved in the CMA Business Case component.

### DETAILED DESCRIPTION

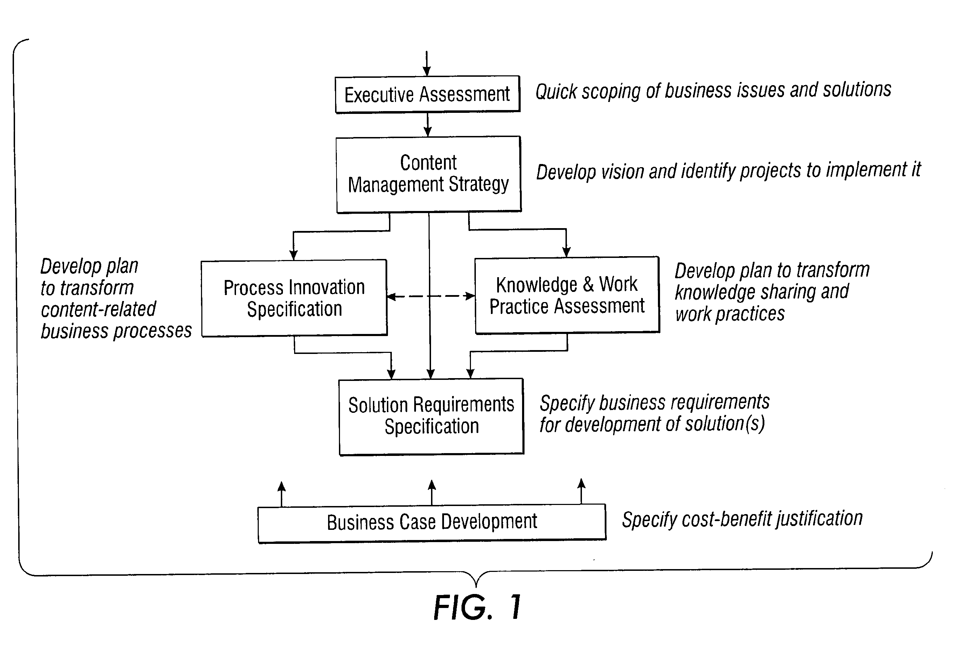

The system and method for CMA can be provided in six exemplary, discrete component services (see Figure 1). These can be delivered either as separately provided projects or, more usually, combined in a configuration unique to a specific customer's requirements. These six CMA service components examine the way knowledge and work practices support business processes, propose changes to business processes, specify requirements for solutions, make a business case for change, and propose an overall strategy for a program of projects to implement these changes.

The Executive Assessment component service takes an overview of part or all of an organization and identifies areas where solving document, content and knowledge issues could provide major benefits. Executive Assessment gathers, analyses and validates information and develops the case for change, so that customer management can justify the next stage of the work necessary to develop and implement content and document related solutions.

The Content Strategy development component service is used to identify, prioritize and manage content-related initiatives - highlighting opportunities, summarizing benefits and planning project implementation. The Content Strategy service helps clients to identify and manage a program of content-related initiatives across their organization, including the business case, prioritization and implementation planning.

The Knowledge & Work Practice assessment component service is used for assessing knowledge flow and social capital, creating a basis for managing most critical competitive factors, developing a master concept and action plan to enable transformation for sustainable market success and competitive strength. The Knowledge & Work Practice Assessment component service produces a strategy and action plan to transform the organization's most critical and competitive factors: people's knowledge about clients and markets, social capital, capability for innovation and learning, knowledge processes, as well as partnering and networking.

The Business Case development component service calculates paybacks and benefits by reviewing the current situation and identifying performance gaps. Metrics are selected and solutions are identified in terms of business processes and technical components and a vision is developed of the future business context. The Business Case development component service takes a proposed content improvement initiative and develops a cost-benefit justification for it as a project, with a vision of how the preferred solution will work in a business context, risk management and an implementation plan.

The Process Innovation requirements component service analyzes and benchmarks business processes with their content flow, identify improvements, and make proposals for process for change with the anticipated measurable benefits. The master plan for business innovation forms the basis for action and feeds through directly to activities such as change enablement and management. The Requirements Analysis and Specification for Process Innovation (RASPI) component service identifies opportunities for process innovation and benefits including metrics to measure them, delivering an action plan for optimization, redesign and transformation.

The Solution Development requirements component service defines business and technical requirements, linking processes to functions within an overall solutions architecture. Together with the requirements for process innovation, this forms a basis for strategic outsourcing or for a development and integration project. The Requirements Analysis and Specification for Solution Development (RASSD) component service defines business and technical requirements for a new content management solution which create the base for process outsourcing, for an RFP or for an external/internal development and integration project.

Component services can be provided individually or in sequence. Alternatively a customer unique service can be created to meet unique customer requirements. Each component service may provide customer deliverables such as reports on findings, the assessment of strengths and weaknesses, metrics that assist in developing business cases for change, proposed changes to business processes, requirements specifications, an overall strategy and an action plan with key recommendations.

The CMA service focuses on delivering metrics which provide a clear means of measuring a client's business information flows and their use. It also develops measurable goals for business improvement related to the management of information and the associated transactions between users of that information.

The system and method for CMA provide several new features over prior methods. The CMA reviews the current state of and opportunities for improvement in Content Management at strategic, project or detailed operational process levels as required. Two or more of the CMA services can be used in a sequence to identify and specify successively more detailed solutions. The CMA focuses on information and knowledge content across processes and organizational groups, instead of focusing on specific application areas such as Customer Relationship Management or Enterprise Resource Planning. The CMA employs a modified version of the Six Sigma approach to business modification and applies it to business process improvement. The CMA is supported by and interfaces with an integrated suite of other methodologies for example, such as those provided by Xerox Corporation for Project Management, Systems Integration and Change Enablement. The CMA differs from traditional business consulting in that it investigates the applicability of collaborative commerce processes and technology, performs a knowledge management assessment of cultural behaviors and draws on behavioral science for establishing better work practices.

The system and method for Content Management Assessment may be implemented as a consultancy service which can operate at strategic, project or detailed operational process levels as required. The CMA provides a formal means of measuring and improving business performance by considering the management and transaction of business critical information which is held in the form of documents, email, web content, other types of digital media/assets, and paper documents. It provides a structured program for evaluating the ways in which this business information and knowledge are utilized in support of key business processes, in whichever form the information is held.

An organization's value and future rely on the effective use and enhancement of its intellectual assets - the knowledge of its people, the information available through them to/from its customers and business partners. Content Management enables process innovation and change by managing and distributing information across multiple environments and media. The CMA identifies improvements in business process efficiency and effectiveness related to Content Management processes and their use throughout the entire business value chain. The CMA provides a formal means of measuring and improving business performance. A goal of the CMA is to reduce the risk and improve return on major client investments in the areas of, for example, CRM, ERP, SCM, Intellectual Capital & Property management and Product/Services Lifecycle management. The CMA achieves these goals by targeting the reduction of time to market for client product and services; shortening of lead-times; improvement in management of information assets; enhancement of market communications; improvement of knowledge sharing; development and application of risk management practices.

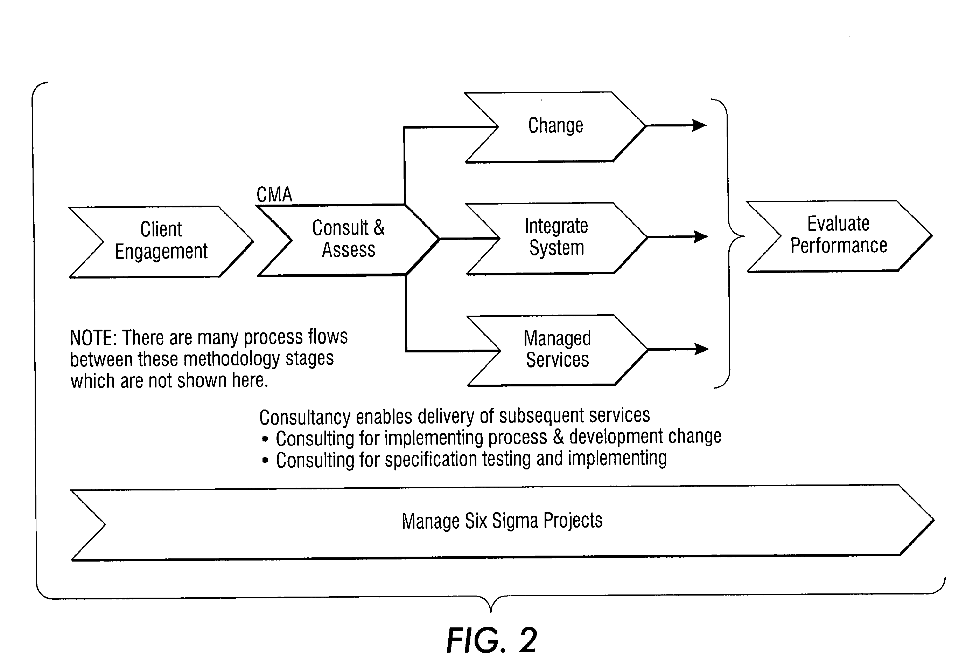

Figure 2 is a flow diagram of a method for CMA. After client engagement, business critical information is identified across processes and groups within the organization, wherein business critical information comprises information stored in the form of web content, electronic documents, paper documents and digital media and unrecorded information. Transactions among users within the organization which are associated with the business critical information and major value chain processes within the organization for managing the business critical information and their associated transactions are also identified. For example, if the customer desires a business case assessment, a workbook with templates specially designed for the business case is used to identify the business critical information, associated transactions and major value chain processes within the organization. Next the CMA analyzes the role and flow of the business critical information and their associated transactions within the major value chain processes across organizational groups within the organization to develop a set of modifications to the major value chain processes for achieving an optimized flow. The flow of the business critical information and their associated transactions through the major value chain processes across the organizational groups within the organization is measured to determine a baseline flow for the business critical information. Modifications to the major value chain processes are suggested and made and the flow of the business critical information and their associated transactions through the modified major value chain processes is measured and the process repeated until the optimized flow has been achieved.

The system and method for CMA can address customer issues such as: Ineffective/inefficient use of information means; slower time to market; slower responses to customers; higher transaction costs; delayed decisions due to missing information; delayed business change due to content conversions between legacy systems; higher costs due to operating in silos; duplication of efforts due to information dispersion across many different systems and sources; regulatory conformance costs become higher. The system and method for CMA can provide customer benefits such as: identifying solutions and an action plan for: reducing time to market; faster and higher quality customer responses; lower transaction costs due to improved communication; more relevant, timely and accurate information; more re-purposing of flexible content through inter-system communication; information sharing at lower cost; multi-sourced information personalized through a single access point; conformance information as a product of normal business processes.

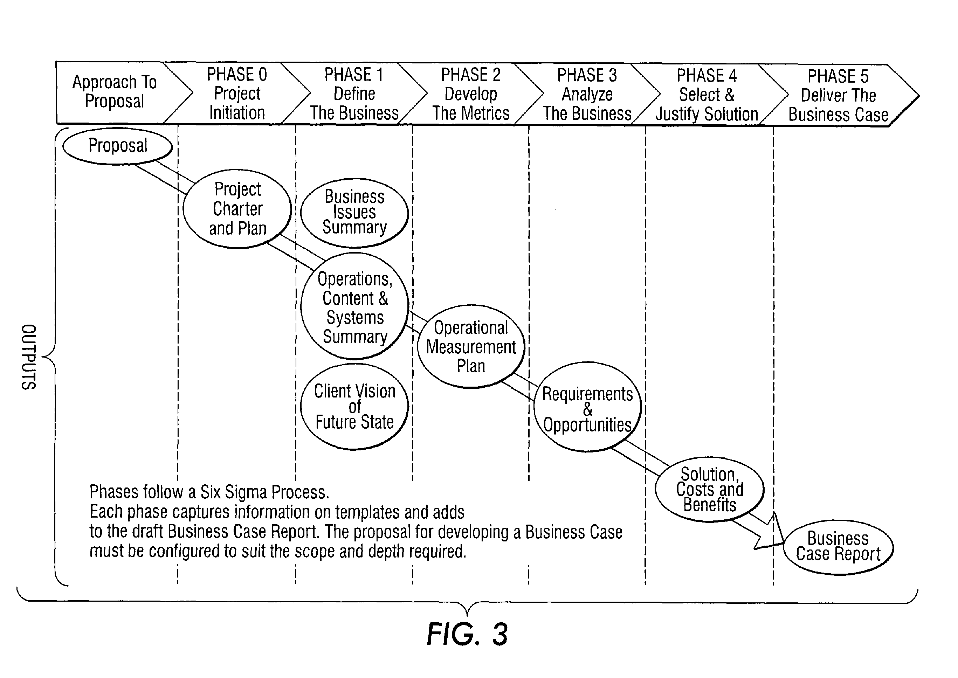

CMA Business Case Component Example: A flow chart of the steps involved in the CMA Business Case component is shown in Figure 3. Some of the questions to be asked (which may be included in one or more templates in a workbook) and an outline of some of the questions and steps to be taken are:

A Business Case develops a cost-benefit justification for a content improvement initiative.

Obtain estimates of costs and benefits.

Which costs? Define the main cost elements of the solution.

Which solution? Define the features and implementation options.

Which features are required? Define the desired state.

What is the desired state? It's the solution to current issues.

What are the current issues? What do we use to measure them?

How will we know when they're fixed? What are the performance goals?

What is the performance gap between the current and desired states?

Which solution features are required to close the gap? Will they close it?

How will we measure the success of the solution? Achievement of which goals?

How will the solution change the way people work? What will it cost for training and rollout? Which implementation options, e.g., pilot, 'big bang', restricted scope?

What else needs to change to ensure its success?

Which benefits? Measure.

The current way of working and its costs.

The way of working using the new solution.

The difference in costs between the two, and revenue-generating benefits.

A CMA RASSD component applied to an exemplary professional services client may produce the following:
Client: Trade support agency and consultancy for international business relations.
Business Issues: Become first port of call for international business relations; transformation from a state-funded organization to leading edge consultancy.
Solution: Analyze and specify requirements and opportunities for knowledge management; specify requirements, layout and logical structure of new internet and intranet site; specify requirements, layout and logical structure for new yellow pages of expertise; analyze and specify integration with legacy systems.
Benefits: Created base for evaluation and selection of new knowledge sharing platform; specified requirements for new international yellow pages of expertise (expert brokering); defined new structure, organization, and processes for enterprise content and knowledge management; created base for successful implementation of new internet/intranet within 4 months; new internationally visited internet site increased traffic in the first weeks by 25%.

The system and method for CMA may adopt the Six Sigma methodology developed in the manufacturing community and modify it to measure and improve business performance in the area of information technologies and content management. Six Sigma is defined as the quality and business management initiative credited with taking millions of dollars of cost out of hundreds of corporations, while simultaneously improving the quality and customer satisfaction of those same corporations.

Six Sigma starts by aligning all levels of an organization to the goals established by the top leadership. Leaders are instructed on how they should set goals and how they should tie incentives to those goals. They also learn how to clearly identify measurements that serve as indicators of improvement in organizational processes as well as processes that deliver products or services directly to the customer. Once those measurements are clearly identified they are regularly monitored for improvements. Mid level management learns how to identify those areas that have poor quality, or "hidden costs" which are those costs that can't be broken down and traced to specific operations or are not made known to management, making higher quality more expensive. Once those areas are determined, the Six Sigma Methodology shows them how to work through the issues in bite size projects. Once the bite size projects are identified, project leaders at the process level of an organization, commonly called Black Belts and Green Belts, are assigned to follow a rigorous process designed to properly identify and fix the defective process steps. Defect reduction eliminates hidden processes and customer service issues. When Six Sigma is properly implemented costs will go down quickly thereby aligning back to the operational goals established by top leadership. Six Sigma is not about establishing a separate quality silo within a company or organization. It is about building quality into your existing structure.

Exemplary templates are attached hereto as Exhibit A. One exemplary way in which the system and method for content management assessment may be implemented is in a workflow process which employs a workbook. An exemplary workbook for implementing the Business Case component is attached hereto as Exhibit B.

The invention has been described with reference to particular embodiments for convenience only. Modifications and alterations will occur to others upon reading and understanding this specification taken together with the drawings. The embodiments are but examples, and various alternatives, modifications, variations or improvements may be made by those skilled in the art from this teaching which are intended to be encompassed by the following claims.

### Exhibit A

### Example Template: Goals and Measurements Plan

### Use one of these for each goal

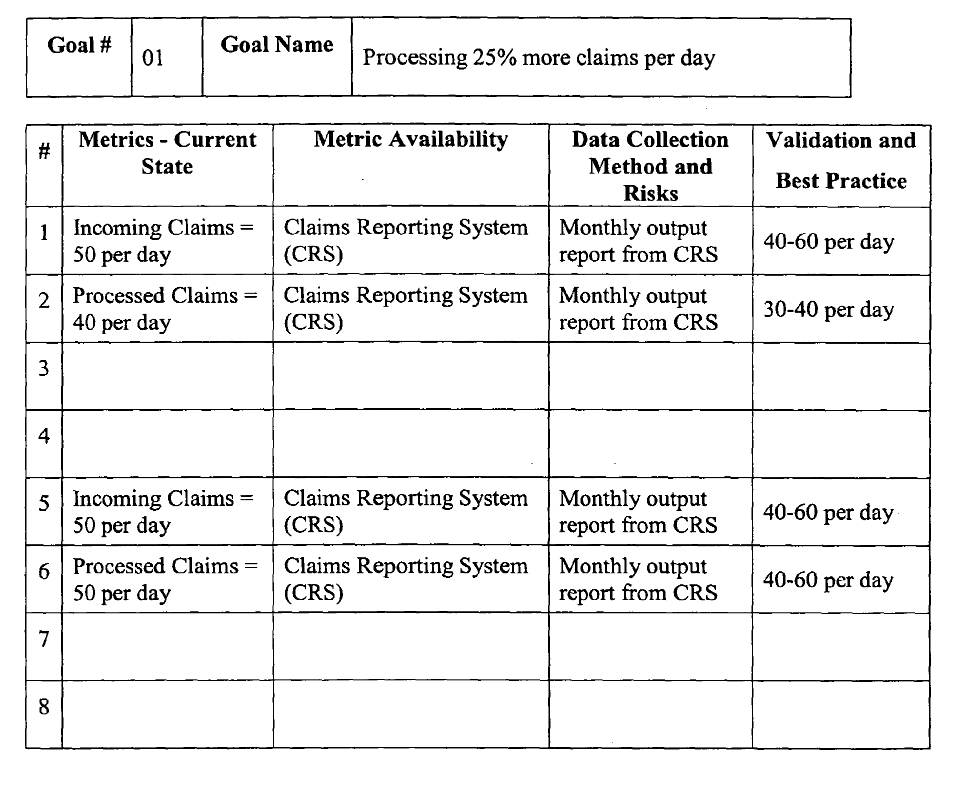

### Example Template: DOCUMENT RETENTION SCHEDULE

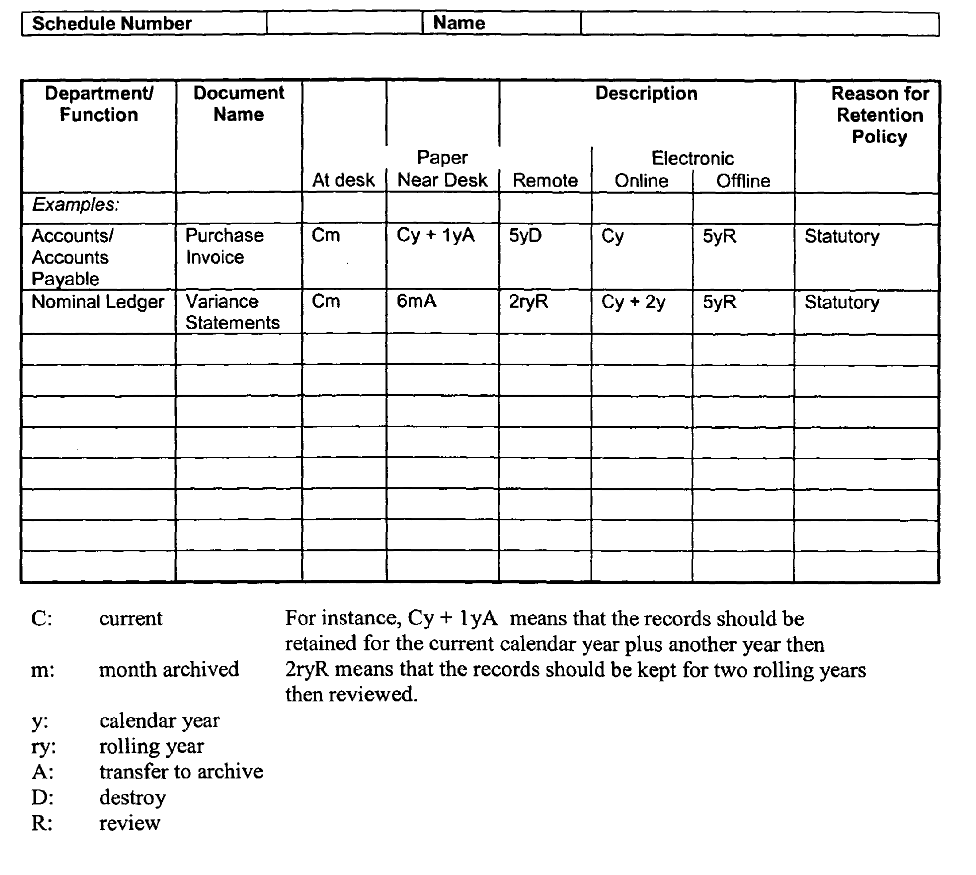

### Example Template: Information types and sources

Consider three (or more) types of information that you frequently need. List them in the first column of the form below.

In the second column, fill in the best source for the answer you need.

| **Types of Information we need most often** | **Best ways to direct information request** |
|---|---|
| 1. | |
| 2. | |
| 3. | |
| | Options for directing information requests may be: |
| | • Contact a corporate information specialist |
| | • Send an email or voicemail to a distribution list |
| | • Send emails or voice mails to a few individuals |
| | • Post a general request where all members of the organisation will see it |
| | • Post a request where a specific group will see it |

### Example Template: Document Definition

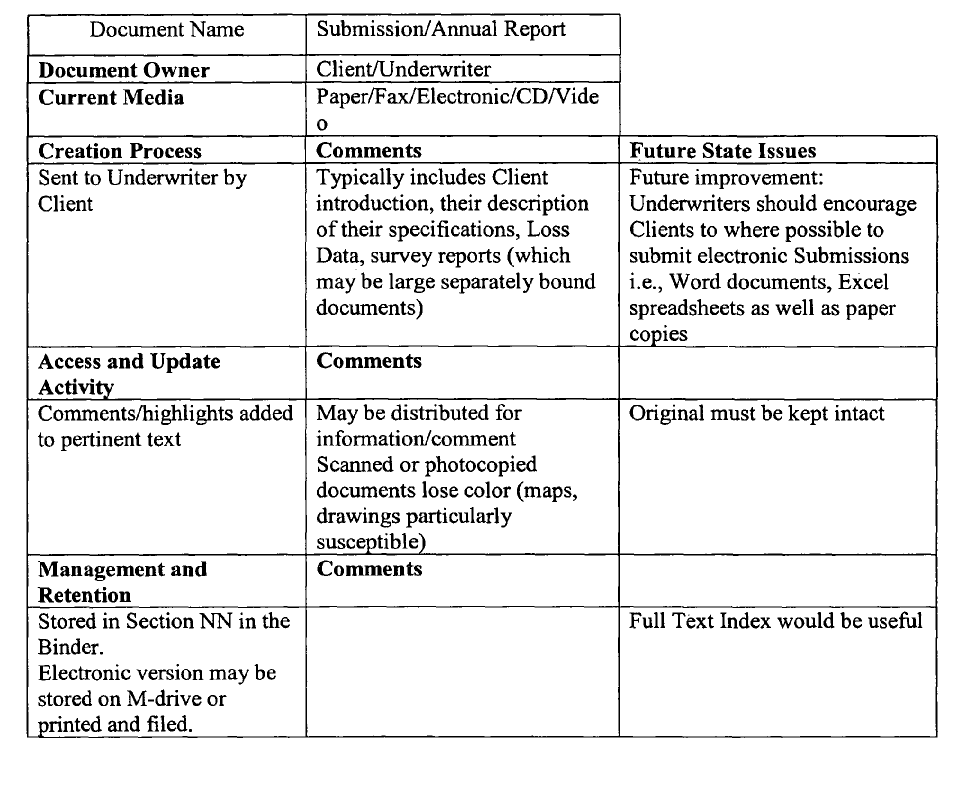

### Example Template: Document Profile Survey

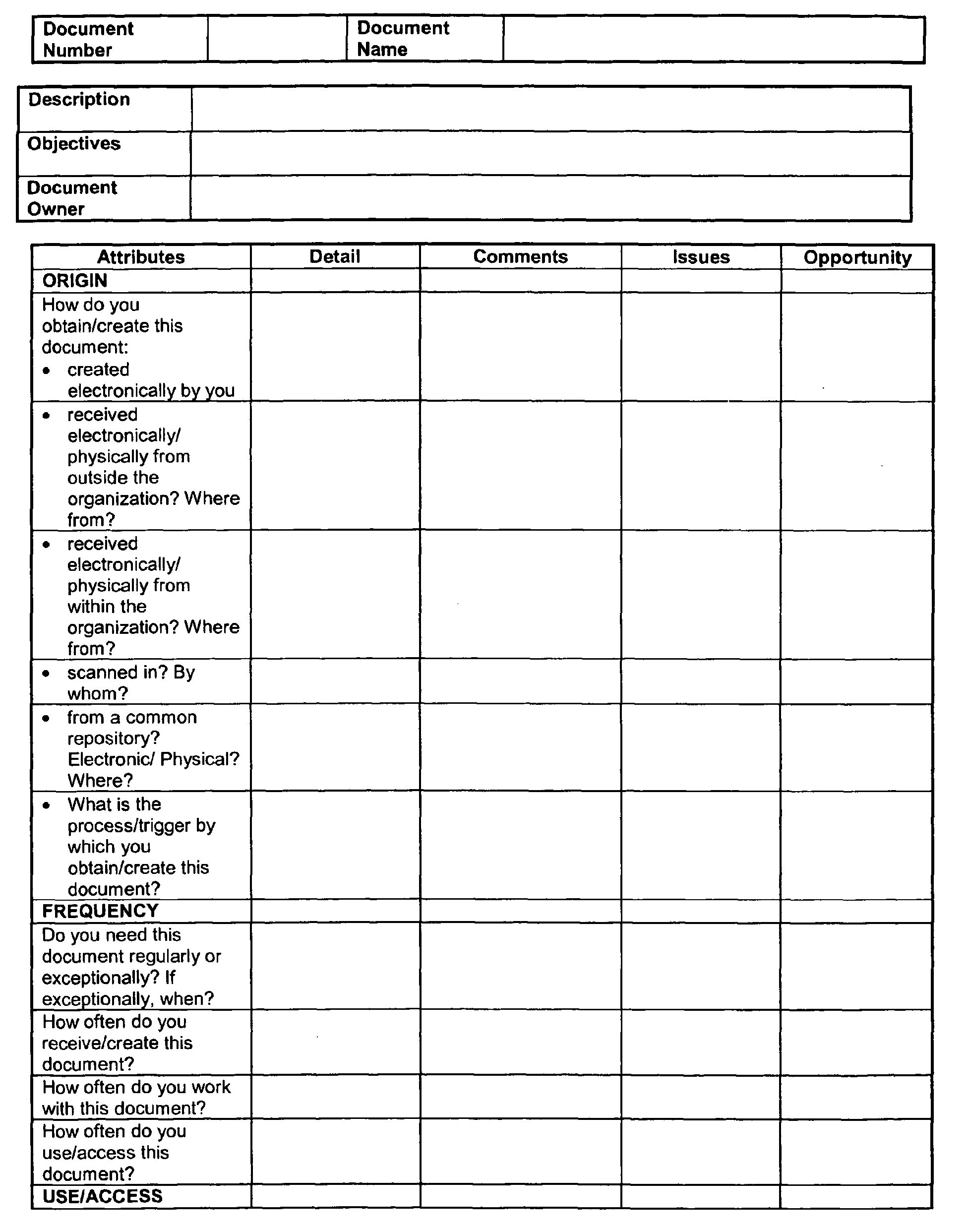

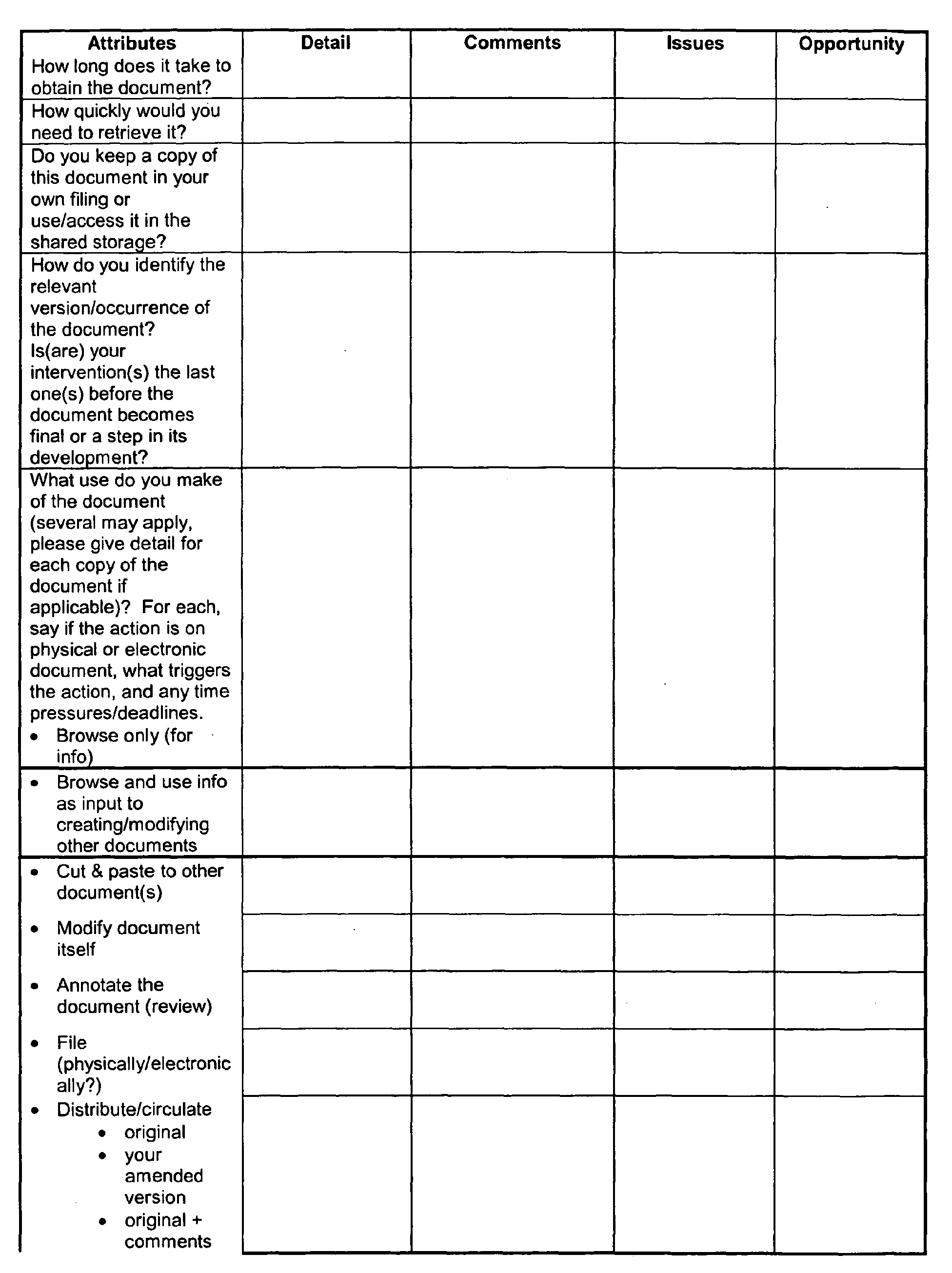

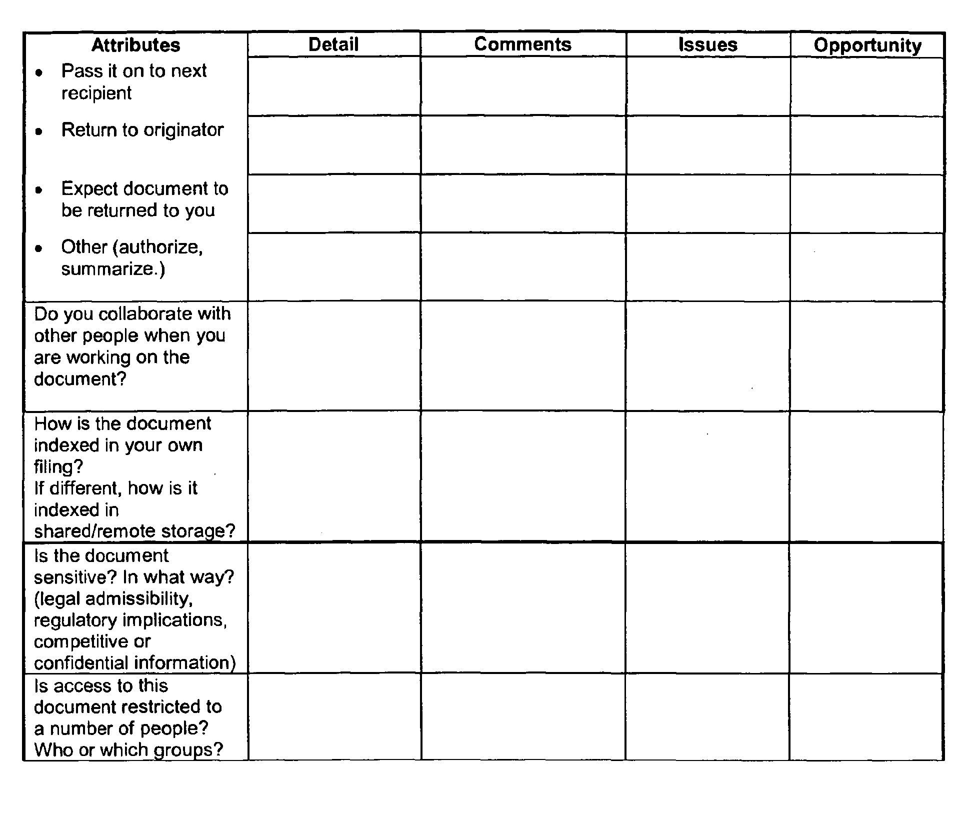

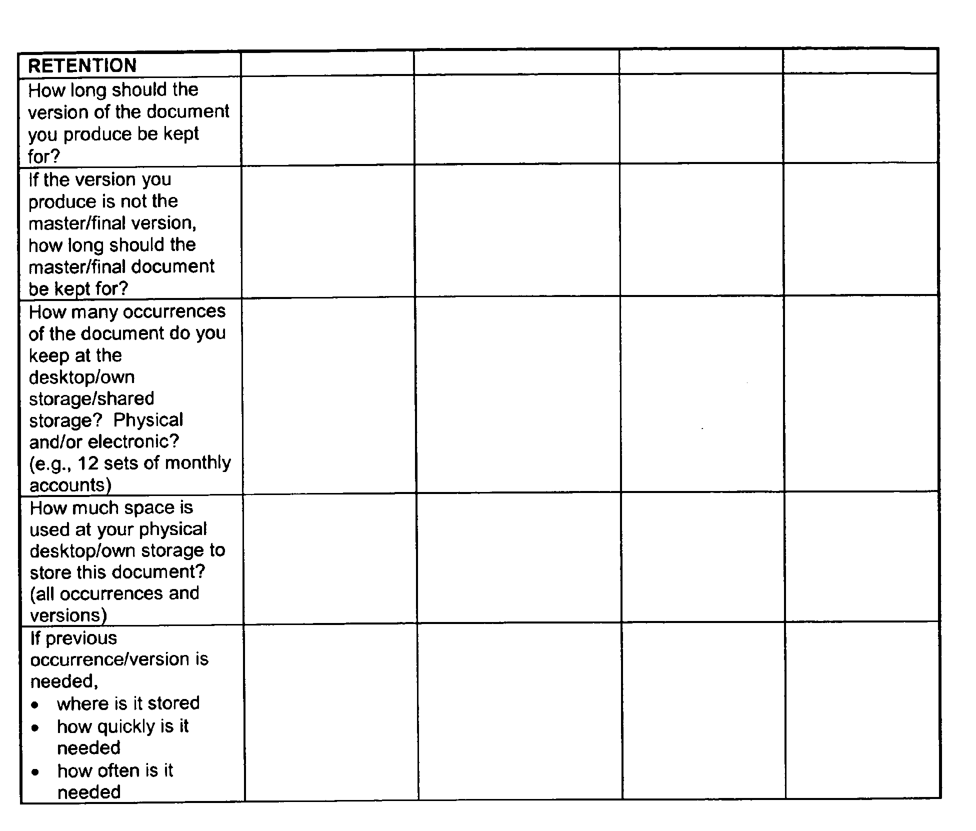

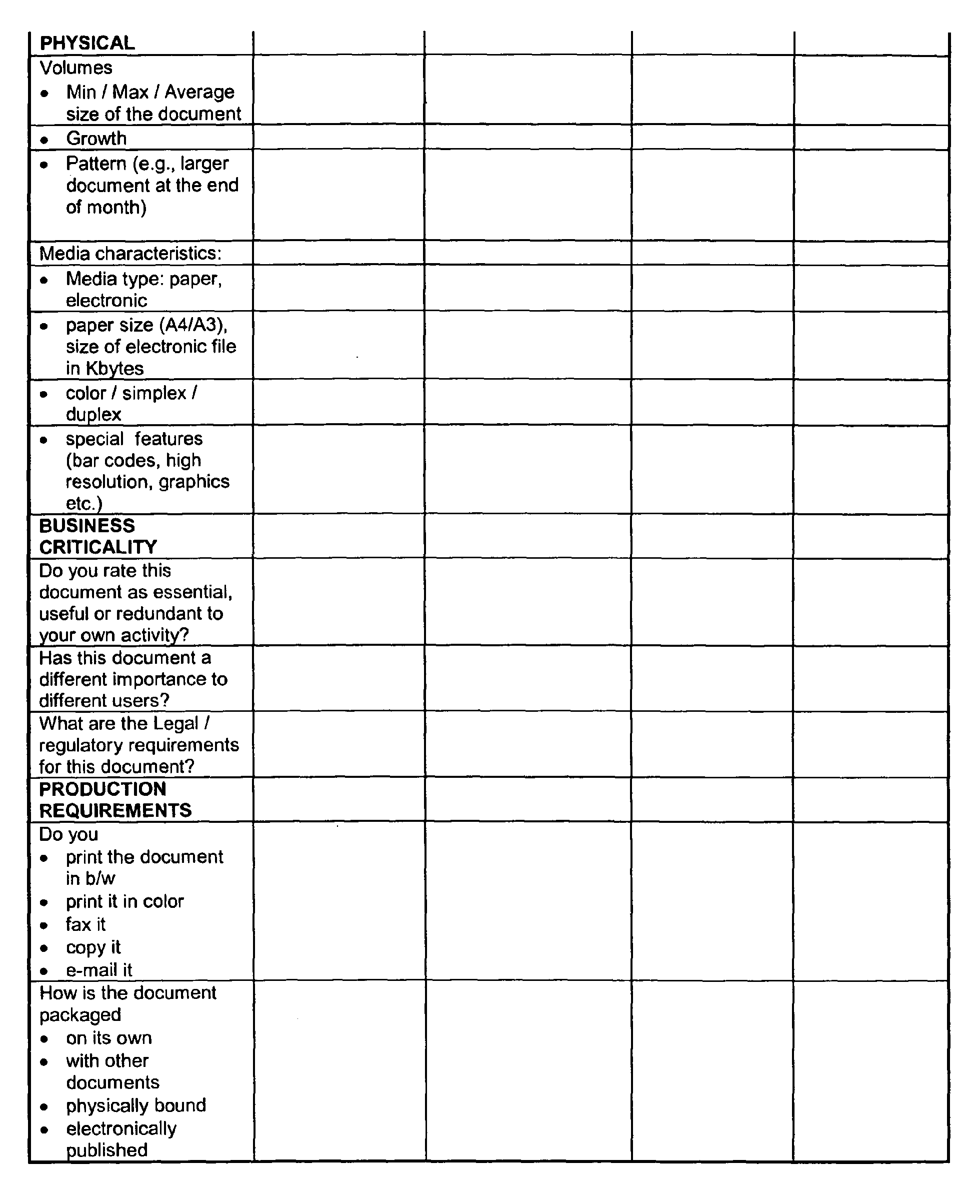

### Example Template: Document Management Questionnaire

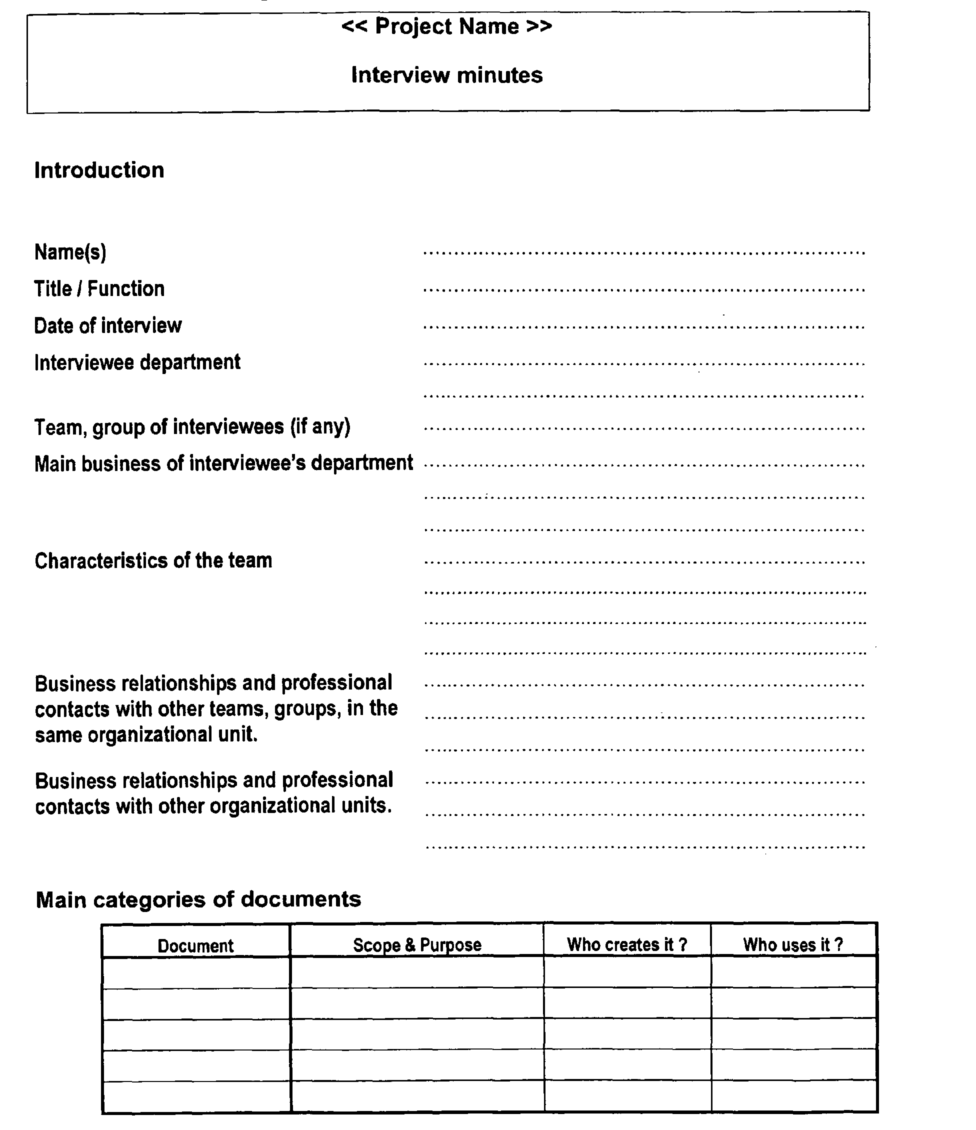

### Study of document XXXX

### Document characteristics

| Average volume | |
|---|---|
| Can the document be split in modules? | *A module is a document unit that can be processed separately from the other parts of the document, or be used in several documents. Example: "slave" documents in the Microsoft Word Master and Sub- documents mechanism.* |
| Is the document created using a model | *for instance a Word model (.dot file)* .... |
| Does the document contain graphics or photographs | |
| Is color used? | *The document can be simply black* & *white (if it has only text), or monochrome with continuous variations of gray intensity (if it has photographs), or it can have color graphics (with a little number of colors), or it can have color photographs (demanding a high level of realism)* |
| What tool is used for document creation? | *Examples: Word, scanner, database application, manual creation*.... |
| What tool is used for creating or acquiring graphics or photographs (if any)? | *e.g. : Photoshop, Illustrator, PowerPoint* |
| Does the document contain information from a non-documentary origin? | *example : data extracted from a database, results of calculation or simulations*, ... *These data were not created in the document, but introduced into the document after having been created by another tool*. *"Information" also includes graphical data An Excel sheet is regarded* as a *document* |
| If so, how is this information introduced into the document? | *Manual copy, "cut & paste" (with or without links), file sharing ?* |
| If so, does this information continue to change after being introduced into the document ? Is a synchronization mechanism required ? | *The information created in its original environment might be updated in this environment after inclusion into the document, which might make the document obsolete. The document might have to be updated*.... |

### Study of document creation and validation process

| | |
|---|---|
| Who decides to create a new document | *e.g.: the author, a project leader, a manager* ... |
| Is document creation part of a planning? | *Is there a planning document mentioning creation of this document* as a *task to be performed? Is there a date for that?* |
| What event causes the document creation? | *e.g.: a meeting, a decision, a completion of a technical or administrative or commercial task* |
| What is the creationlreception frequency? | |
| *If the document is created by your organization (in or out of the team)* | |
| Who writes the content of the document? | |
| Who inputs the content (if different)? | *e.g.: the author writes the document manually then a secretary enters it in Word* |
| Is the same document written by several authors in parallel? | *e.g.: several specialists of different domain, each writing the part corresponding to his (her) specialty*... |
| Is the same document written by several authors sequentially? | *same idea, but at least one of the author needs the contribution of another author to perform his (her) own task, and has to wait for its completion*.... |
| *If the document is created outside your organization and received by your organization* | |
| By what mean is the document transmitted | *e.g.: paper mail, electronic mail, fax*... |
| Is the document sent to a review group for comment? | ... *a group that comments the document, checks its relevance or completion, and makes suggestions for improvement before the document is published* |
| If so, is this group permanent? | *a different group might be formed for each new document*.... |
| Are comments sent back to the author? | *another possibility is that someone else collects the readers suggestions and update the document, taking suggestions into account* |
| Is the document annotated? Is a comment sheet created? | *"Comment sheet"* = *document collecting the readers comments and suggestions, different from the original document* |
| How many reading cycles are there? | *Is there an indefinite reading*/*modification loop ? Or one (two, three,* ...*) reading cycle only?* |
| Who validates this document? In how many steps? | *Are one or several persons entitled to approve the document? Are there several signatures?* *Is validation separate from approval?* |

### Study of the document management process

| | |
|---|---|
| Who is allowed to know that the document exists? | ...*the existence of very secret documents might be hidden to unauthorized users* |
| Who is allowed to browse the document? | ...*note: browsing is different from modifying* |
| Who is allowed to modify the document after initial creation? | *the author is frequently the only person allowed to modify the document, but there might also be other authors* |
| Who is allowed to make a copy of the document? | ... *this means generating a new reference for a new object in the document management system, with the same initial content* |
| Who is allowed to annotate the document? | ...*to add comments about the document without modifying its content* |
| Who is allowed to print the document? | *note: the printing might be charged to the user...* |
| Do all these access rights vary within the document life cycle? | *Example : restricted consultation before the document is validated, then enlarged access after the document is validated* ... |
| Who is allowed to classify a document? | *Place the document into a folder or a cabinet where a community* of *users can retrieve it?* |
| What are the document classification criteria or metadata? | *e.g.: subject, originator entity, type of document,*... *several criteria can exist simultaneously.* |
| To be able to identify the document without having to read it, what information would be required? | *e.g.: title, author's name, subject,* ... |
| What other information could be associated with the document? | *e.g.: identification number, date, version number, abstract, etc.* |
| Are there several versions of this document? If so, is it required that all the versions be stored? | |
| How long must this document be stored, and why? | *What is the business reason for keeping this document 1) at all 2) for a specified length of time* |
| Is it required to keep the paper form of this document | *e.g.: for legal reasons* |
| | |
| Is the document related to other documents, through a relationship that could make a common management necessary? | *examples: document A is derived from document B (so if document B is modified, document A must be updated) - document A is a translation of document B - document A is a reply to document B*.... |

### Study of the document distribution process

| | | |
|---|---|---|
| To whom is this document distributed? | | |
| Is there a standard distribution list? | | ... *with names of people corresponding to a fixed profile, or even with the profile only (without names)* |
| Is there a variable distribution list? If so, what causes the variations? | | |
| What is this document used for by the recipients | | *e.g.: decision, information, performance of a technical, administrative, commercial task*, ... |
| Does the document undergo a process, with several steps and actors? If so, what are the steps? | | |
| If so | Is the document transformed in this process? What are the transformations? | |
| If so | Is other information generated in this process? | |
| If so | Are software non documentary applications involved in this process? | *e.g.: data extraction from a database, performance of scientific or financial calculations*, ... |
| If so | Do the document access rights vary in this process? | |

### Study of the document search and retrieval process

| | |
|---|---|
| What information associated with the document would improve retrieval (search criteria)? | *e.g.. title, subject, author's name, creation date*... |
| Is content-based (full-text) search relevant for this document? | *Retrieve all document containing a given phrase : e.g. "Quality assurance" near "Document management"*... |
| Can this document be identified from a reference in another document? | *Is it possible to select this document by navigating in the whole documentation, using document references* |
| Are there queries that should be repeated systematically, at specific times | *Each month (week, day, ...), retrieve all documents of a given origin, satisfying given criteria*.... |

### General requirements

Generally, do you believe that:
◆ Some useful documents are not transmitted to their intended readers, who need to search them or claim for them?
◆ Conversely, distribution lists include recipients who do not need to see the distributed documents?
◆ Documents are distributed, printed, copied, stored several times because of paper-based distribution and management?
◆ Documents are lost and must be re-created (from printed version or from source information)?
◆ Non-validated or non-approved documents are used?
◆ Non up-to-date documents are used?
◆ Approved documents need to be rewritten to be understood by their intended readers?
◆ Approved document with common topics are inconsistent?
◆ Different readers have different interpretations of the scope and purpose of the same document?
◆ Business activities are delayed because of slow distribution of strategic documents?
◆ Business activities need to be repeated because of document loss?
◆ Inadequate decisions are taken because of lack of required documents?

What types of improvement would you request
◆ In document processing activities?
◆ In document processing tools?

### Example Template: Process Analysis Questionnaire

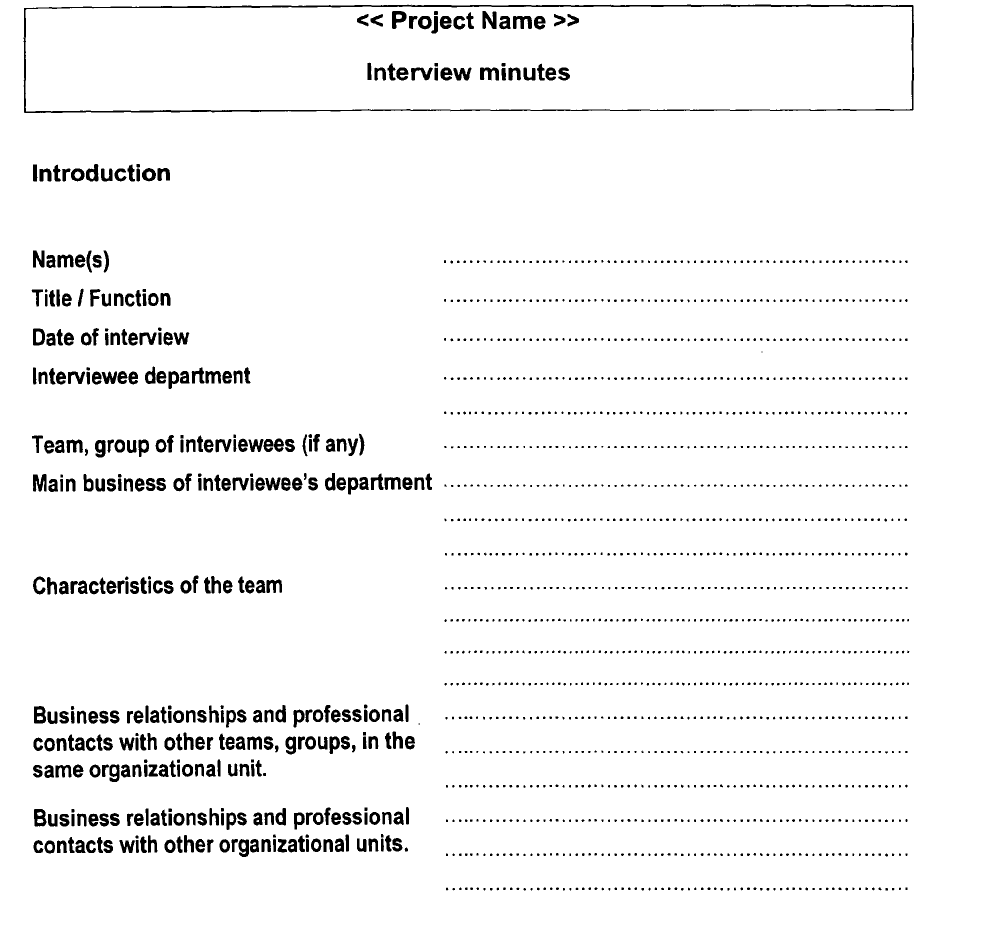

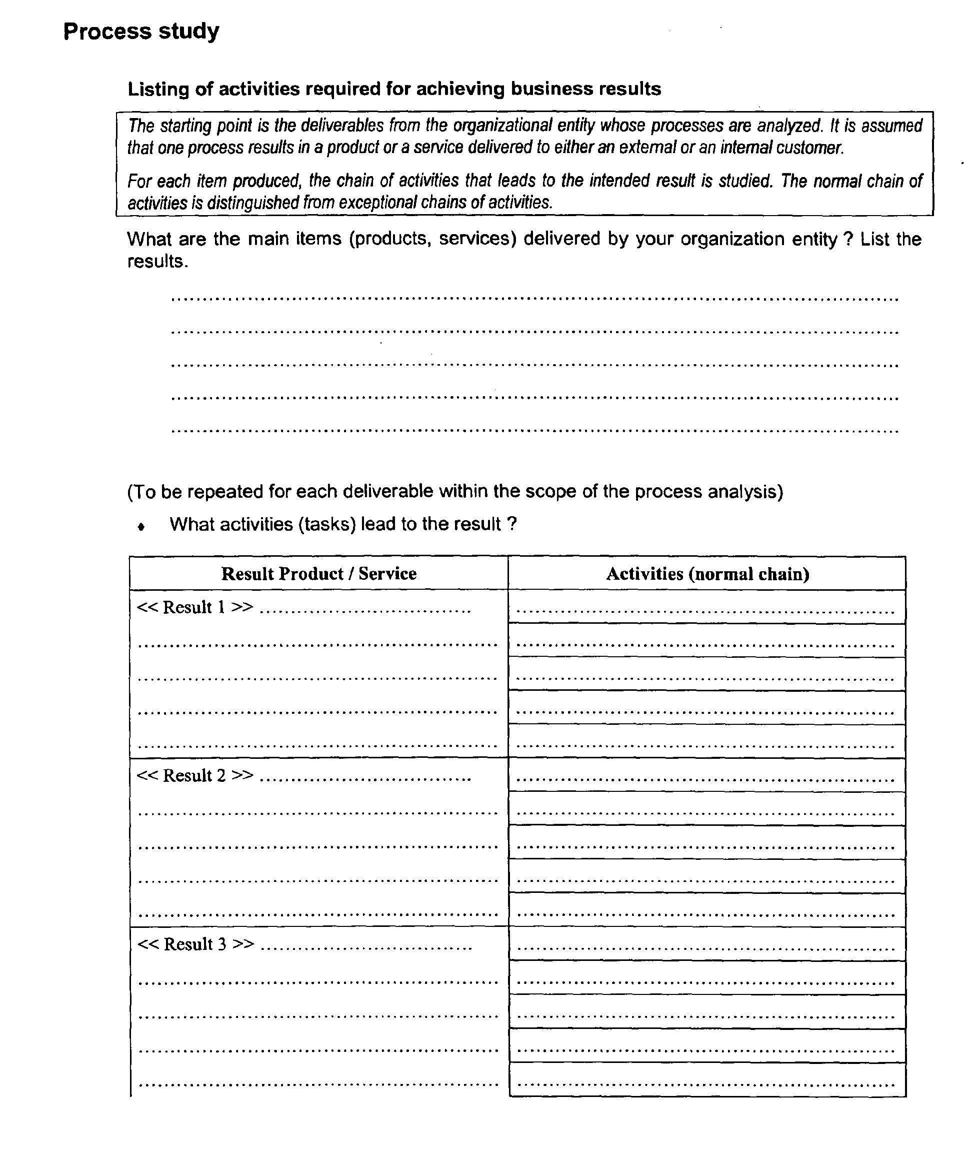

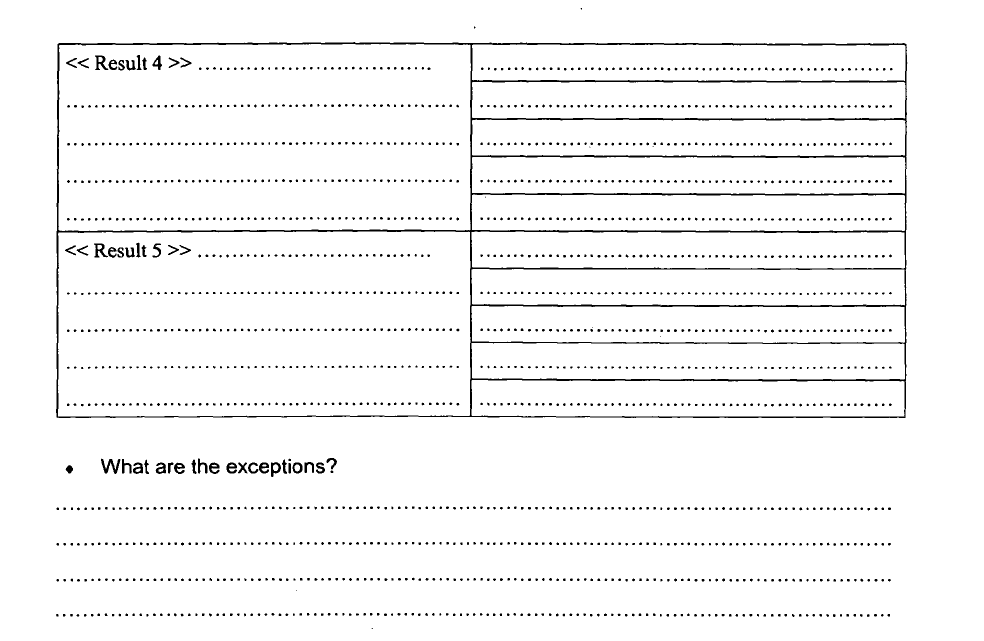

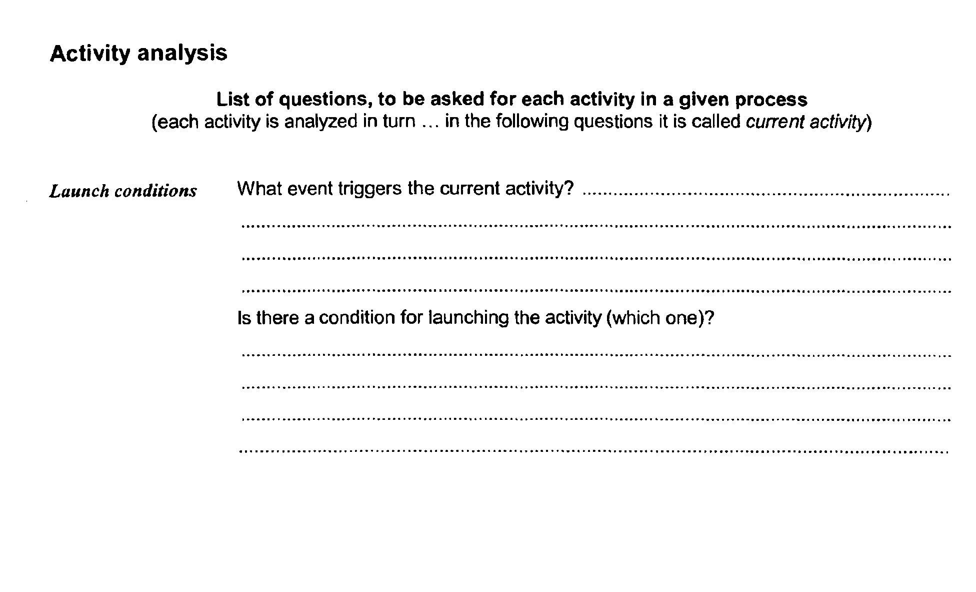

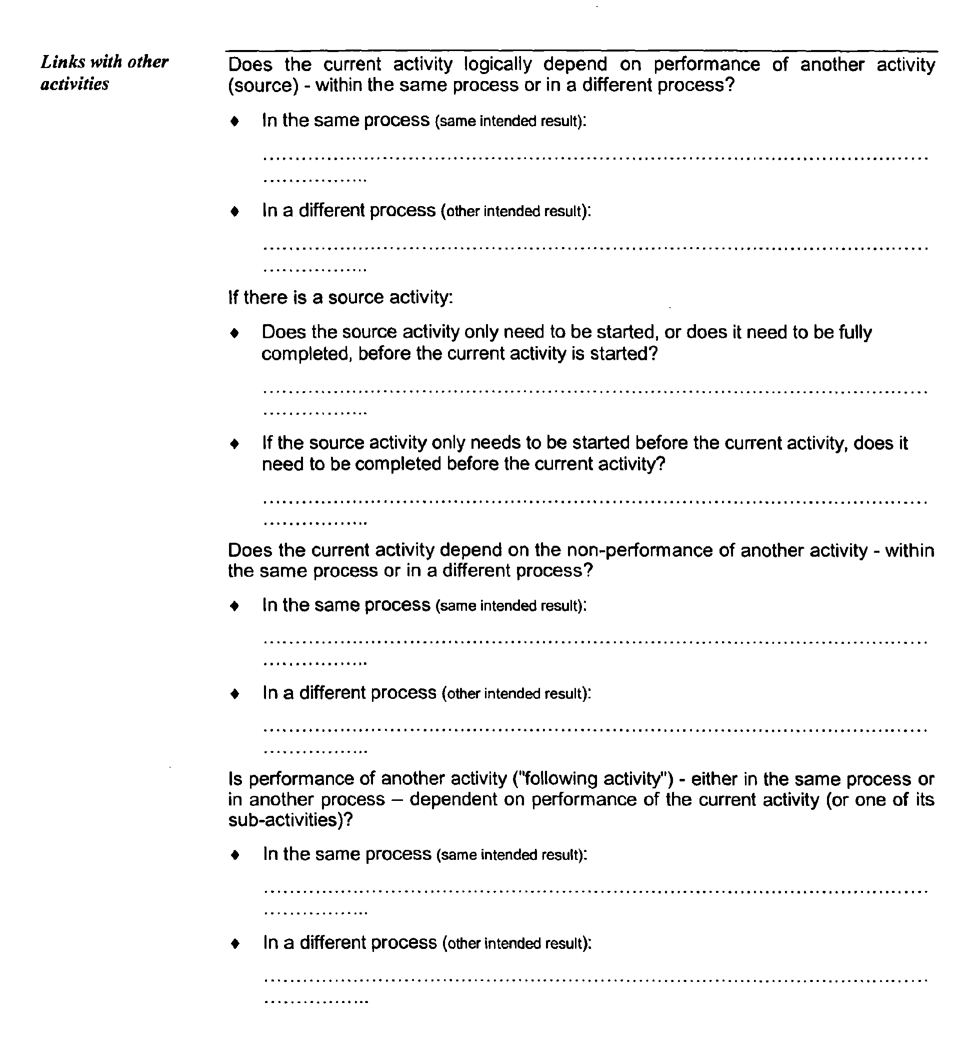

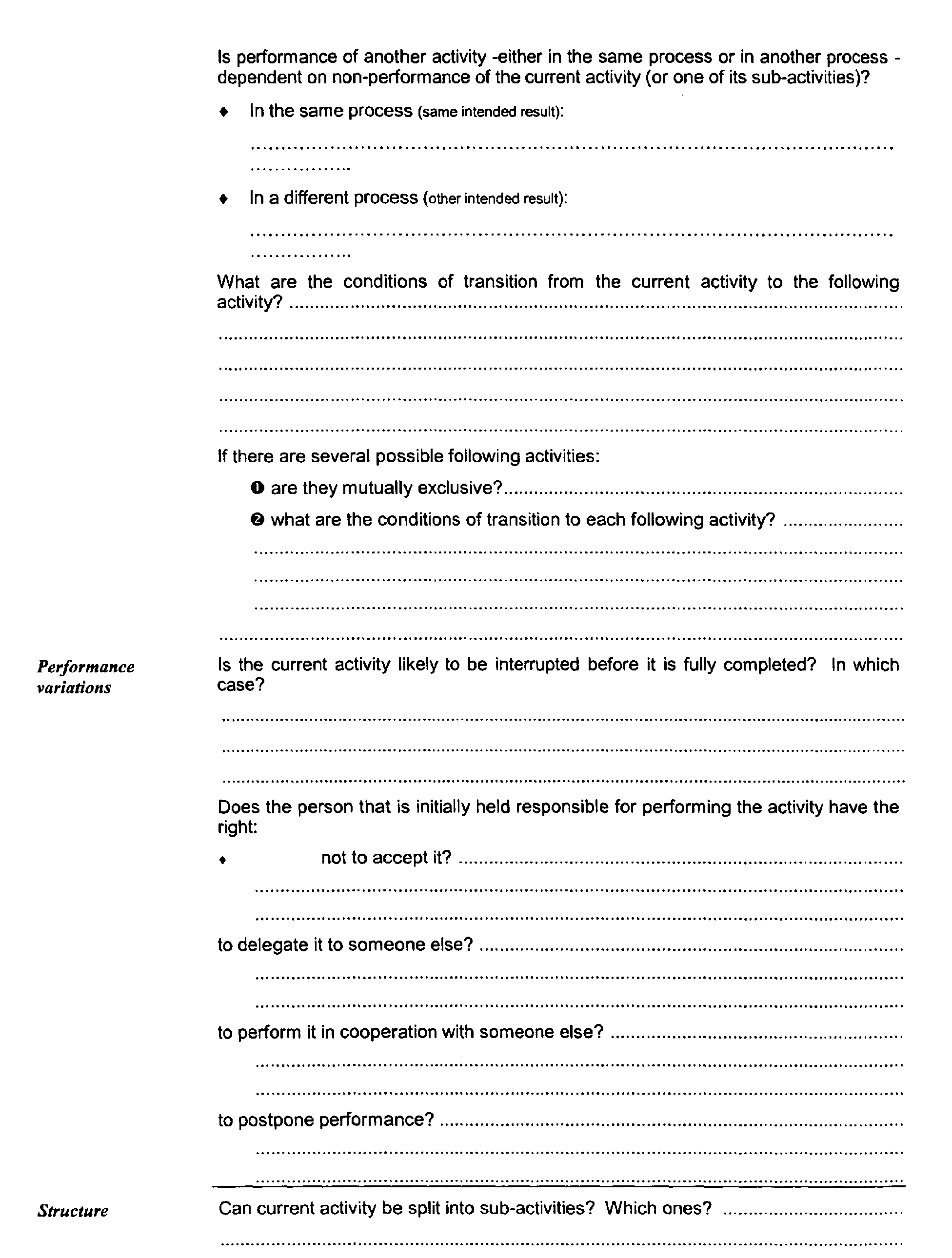

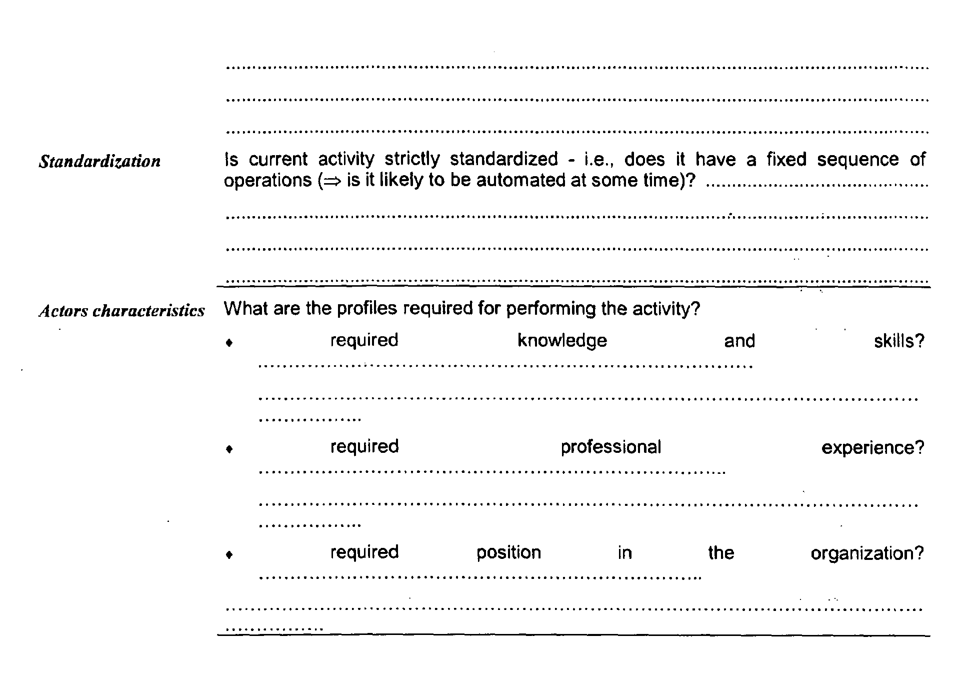

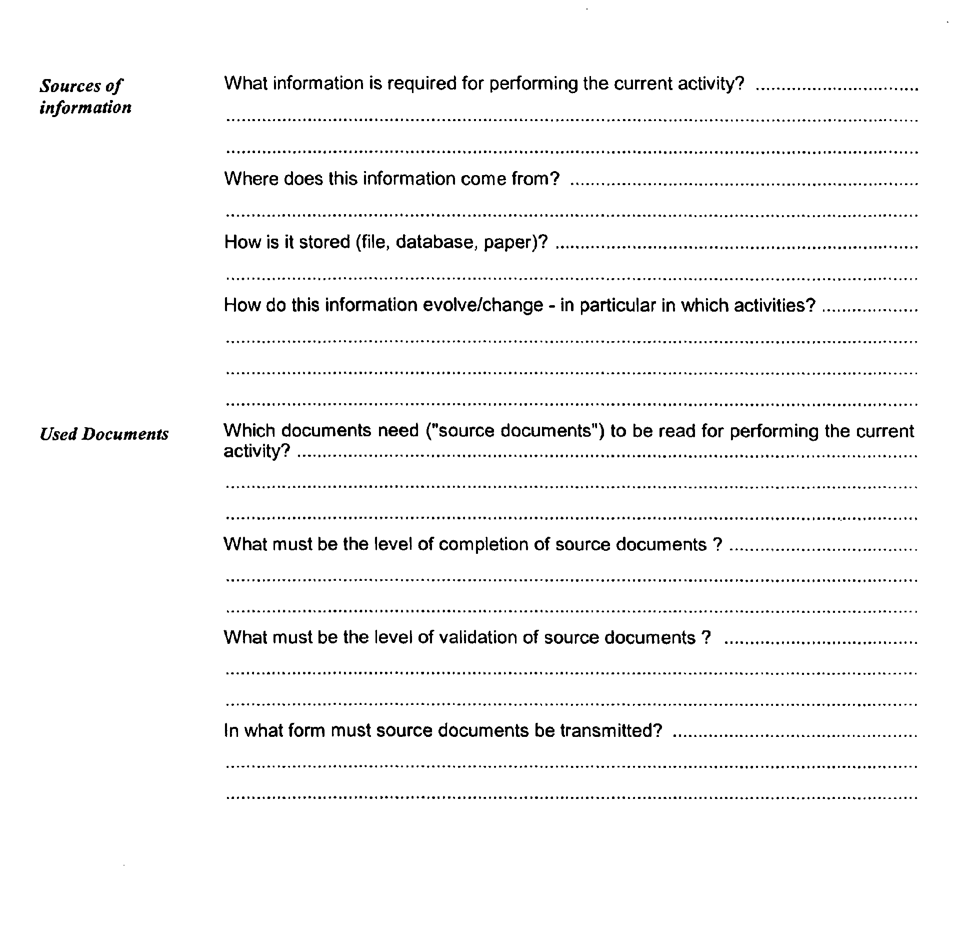

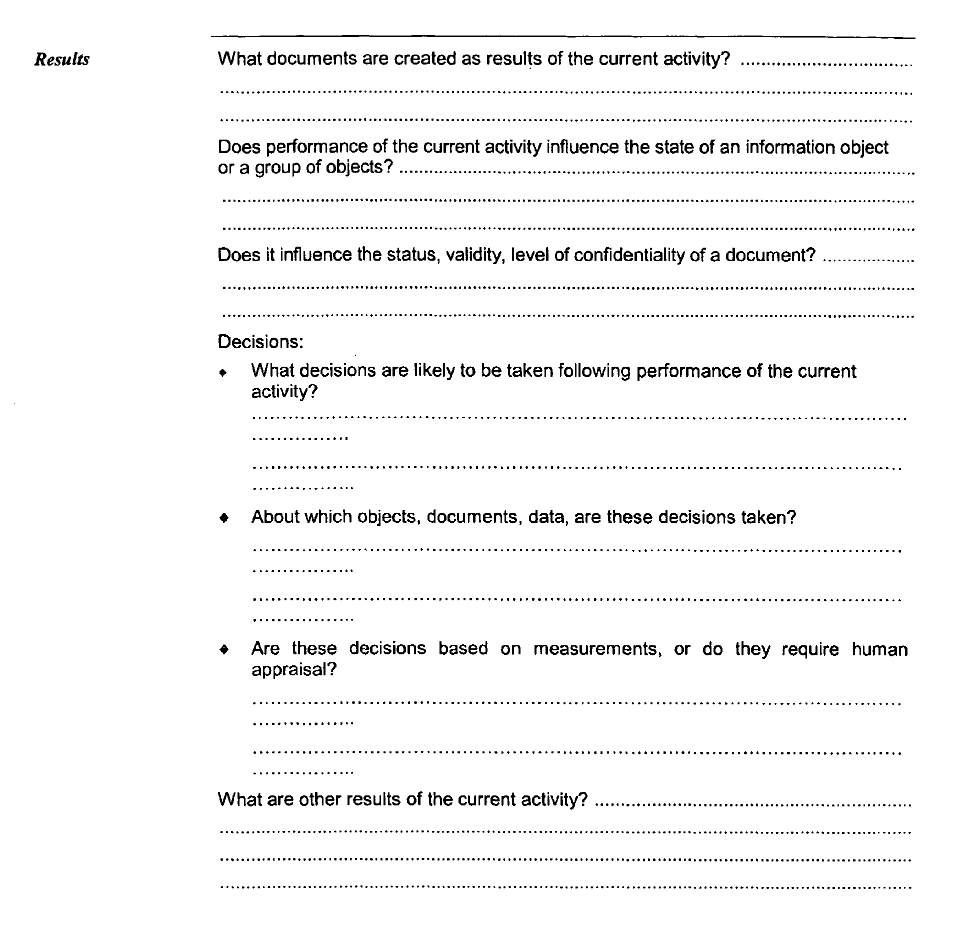

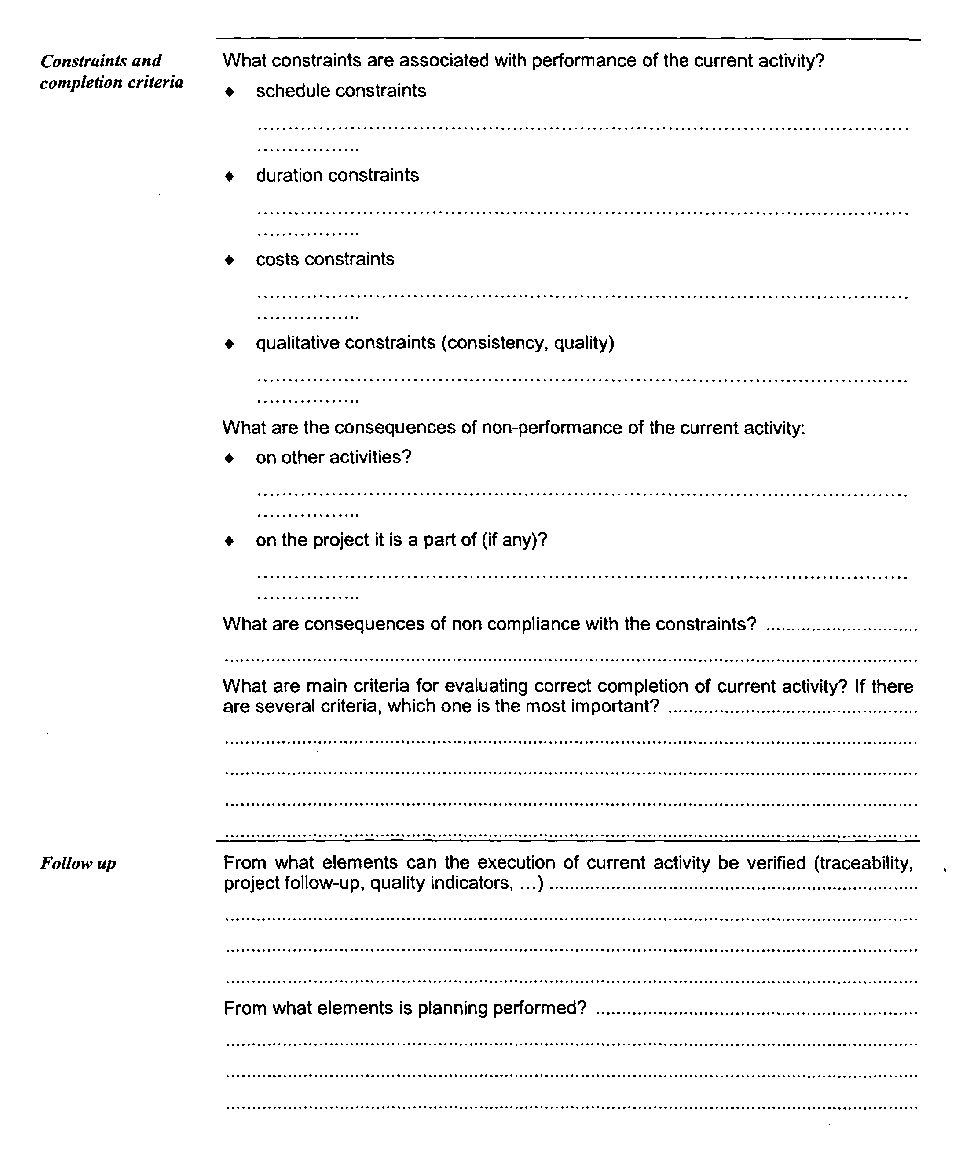

## Claims

1. A system for assessing content management within an organization, comprising:
means for identifying business critical information across processes and groups within the organization, wherein business critical information comprises information stored in the form of web content, electronic documents, paper documents and digital media and unrecorded information;
means for identifying transactions between users within the organization which are associated with the business critical information;
means for identifying major value chain processes within the organization for managing the business critical information and their associated transactions;
means for analyzing the role and flow of the business critical information and their associated transactions within the major value chain processes across organizational groups within the organization to develop a set of modifications to the major value chain processes for achieving an optimized flow;
means for measuring the flow of the business critical information and their associated transactions through the major value chain processes across the organizational groups within the organization to determine a baseline flow for the business critical information; and
means for modifying the major value chain processes in accordance with the set of developed modifications and measuring the flow of the business critical information and their associated transactions through the modified major value chain processes until the optimized flow has been achieved.

2. The system of claim 1, further comprising: means for recording the identified unrecorded information.

3. The system of claim 1, wherein the means for analyzing the role and flow of the business critical information and their associated transactions includes means for pinpointing problems in which business critical information, knowledge and processed combine to affect key business performance indicators.

4. The system of claim 1, wherein the identifying means comprises means for using a workbook with an ordered set of templates for gathering each of business critical information, associated transactions, and major value chain processes.

5. The system of claim 1, wherein the wherein the means for analyzing the role and flow of the business critical information and their associated transactions includes means for developing a set of metrics for measuring the flow of the business critical information and their associated transactions through the major value chain processes across the organizational groups within the organization.

6. The system of claim 1, further comprising means for defining a business service within the organization which uses business critical information in a defined way.

7. The system of claim 6, wherein the means for defining the business service step comprises means for defining an executive assessment for identifying areas within the organization where solving document, content and knowledge issues could provide major benefits..

8. The system of claim 6, wherein the means for defining the business service comprises means for defining a content strategy for identifying and managing content-related initiatives across the organization.

9. The system of claim 6, wherein the means for defining the business service comprises means for defining a knowledge and work practice assessment for identifying critical and competitive factors within the organization.

10. The system of claim 6, wherein the means for defining the business service comprises means for defining a business case for developing a cost-benefit justification of a proposed content improvement initiative.

11. The system of claim 6, wherein the means for defining the business service comprises means for defining a requirements analysis and specification for process innovation for the organization.

12. The system of claim 6, wherein the means for defining the business service comprises means for defining requirements analysis and specification for solution development for the enterprise.

13. The system of claim 6, wherein the means for defining the business service comprises means for defining two or more of the following for the business: a content strategy, a knowledge and work practice assessment, a business case, a requirements analysis and specification for process innovation and a requirements analysis and specification for solution development.

14. A system for assessing content management within an organization, comprising:
means for identifying business critical information across processes and groups within the organization, wherein business critical information comprises information stored in the form of web content, electronic documents, paper documents and digital media and unrecorded information;
means for identifying transactions within the organization which are associated with the business critical information;
identifying major value chain processes within the organization for managing the business critical information and their associated transactions;
means for analyzing the role and flow of the business critical information and their associated transactions within the major value chain processes across organizational groups within the organization to develop a set of modifications to the major value chain processes for achieving an optimized flow;
means for measuring the flow of the business critical information and their associated transactions through the major value chain processes across the organizational groups within the organization to determine a baseline flow for the business critical information; and
means for modifying the major value chain processes in accordance with the set of developed modifications and measuring the flow of the business critical information and their associated transactions through the modified major value chain processes until the optimized flow has been achieved.
